# EUROPÄISCHE PATENTSCHRIFT

(11) **EP 2 085 805 B1**
(45) Veröffentlichungstag und Bekanntmachung des Hinweises auf die Patenterteilung: **01.08.2012**
(21) Anmeldenummer: 09000850.9
(22) Anmeldetag: 22.01.2009
(51) Int. Cl.: G02B 21/24, G02B 21/00

(54) **Laser-Scanning-Mikroskop und Baugruppe zur non-descannten Detektion**
Laser scanning microscope and assembly for non-descanned detection
Microscope à balayage laser et composant destiné à la détection nondescannée

(30) Priorität: 31.01.2008 DE 102008007452
(43) Veröffentlichungstag der Anmeldung: 05.08.2009
(73) Patentinhaber: Carl Zeiss MicroImaging GmbH, 07745 Jena (DE)
(72) Erfinder: Schadwinkel, Harald, 30161 Hannover (DE); Wahl, Hubert, 07646 Stadtroda (DE); Schau, Dieter, 07778 Lehesten (DE)
(74) Vertreter: Schiffer, Axel Martin

(56) Entgegenhaltungen:
- DE-A1- 10 120 424
- DE-A1- 10 127 137
- DE-A1-102004 058 565
- DE-A1-102005 008 619
- US-A1- 2004 095 624
- US-B1- 6 437 913

## Beschreibung

Die Erfindung betrifft ein Scanmikroskop, insbesondere ein Laser- Scanning - Mikroskop mit mindestens einer Lichtquelle, die Beleuchtungslicht zur Beleuchtung einer Probe emittiert, mit mindestens einem ersten Detektor zur Detektion des von der Probe ausgehenden Detektionslichtes und mit einem Objektiv, durch das die Probe beleuchtbar und detektierbar ist, wobei das Objektiv sowohl in einem Beleuchtungs- als auch einem Detektionsstrahlengang angeordnet ist,
und einem zusätzlichen non-descannten Detektionsstrahlengang, insbesondere zur Detektion von aus nichtlinearer Anregung mittels gepulstem Laserlicht stammendem Detektionslicht.

Ein derartiges Mikroskop ist beispielsweise in DE 19702753 beschrieben und in Fig.1 beispielhaft als Stand der Technik dargestellt.

Non-descanned Detektoren sind hier in einer Auskopplung zwischen Objektiv und Tubuslinse sowie auf der dem Objektiv gegenüberliegenden Seite der Probe in Transmission vorgesehen.

Für die nichtlineare Laserscanning-Mikroskopie hat sich die non-descanned-detection (NDD) als Standardverfahren etabliert. Bei diesem Detektionsmodus wird das von der Probe emittierte Licht nicht über die Scanoptik und durch ein Pinhole, sondern integral mittels eines großflächigen Sensors detektiert. Vor dem Detektor kann eine Fokussieroptik vorgesehen sein.

Durch die nichtlinearen Prozesse bei der Anregung kann auch ohne konfokale Detektion ein kleines Probenvolumen angeregt und abgebildet werden, außerdem nutzt dieser integrale Detektionsmodus einen relativ großen Teil des von der Probe emittierten Lichts.

Die Detektionseffizienz kann weiter gesteigert werden, wenn der NDD möglichst nah am Mikroskopobjektiv liegt. Das wurde durch eine seitliche Auskopplung in der Nähe der Objektiv-Austrittspupille erreicht.

Derartige Anordnungen sind auch in US 6.437.913 B1 und DE 101 20 424 B4 beschrieben.

Da NDDs vor allem in elektrophysiologischen Anwendungen und an Geräten mit Objektivrevolverfokussierung zum Einsatz kommt, ist die bekannte Art der Auskopplung schwierig: Zum einen, weil dann die Auskoppeleinheit und die NDD-Baugruppe bei der Fokussierung mit bewegt werden müssen, zum anderen weil die seitlich herausstehenden Detektoren die für elektrophysiologische Anwendungen (Manipulation, patch-clamp) geforderte Probenzugänglichkeit einschränken.
Diese zusätzliche und vor allem wegen der seitlichen Auskopplung asymmetrische Gewichtsbelastung verringert die Positioniergenauigkeit und die Verfahrgeschwindigkeit der Fokussierung dramatisch. Erschwerend kommt hinzu, dass für die Anwendung an biologischen Proben es auch zunehmend relevant wird mehrere Wellenlängenbereiche unabhängig voneinander nachzuweisen. Das hat zu Folge dass zwei oder mehrere NDD-Einheiten kaskadiert angeordnet werden und dadurch die zu bewegende Masse verdoppelt oder vervielfacht wird und diese Masse über einen mit dem Grad der Kaskadierung anwachsenden Hebelarm angreift.
Aufgabe der Erfindung ist es, die genannten Nachteile zu vermeiden.

### Gegenstand der Erfindung:

Die oben dargestellten Nachteile einer seitlichen Auskopplung lassen sich vorteilhaft vermeiden, wenn man erfindungsgemäß den Detektor in den Objektivträger oder Objektivwechsler direkt integriert. Dabei liegen vorteilhaft Auskopplung und Detektor zwischen Objektiv und der für die Fokussierung des Objektivwechslers benötigten Führung. Die Belastung der Führung ist dadurch nicht mehr seitlich asymmetrisch und die Zugänglichkeit des Probenraums nach vorne und zur Seite wird nicht eingeschränkt.
Die Erfindung ist Gegenstand der unabhängigen Patentansprüche.
Vorteilhafte Ausgestaltungen sind Gegenstand der abhängigen Ansprüche.

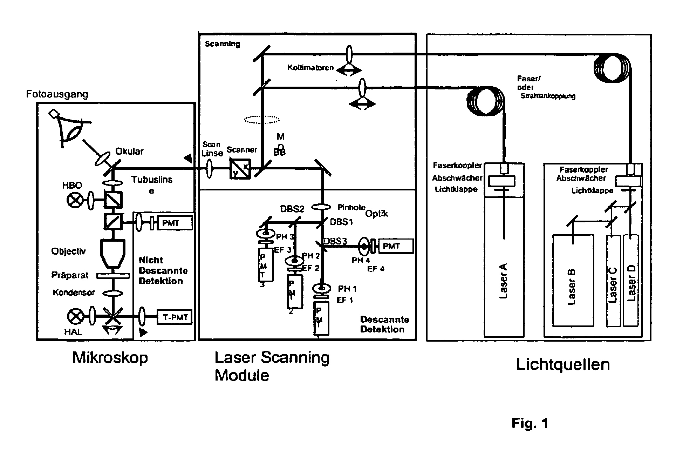

Eine Baugruppe für ein erfindungsgemäßes Scanmikroskop wird nachstehend anhand der Zeichnungen Fig. 1-3 näher erläutert.

### Aufstellung der verwendeten Bezugszeichen

1 Schwalbenschwanzführung
2 Feststellknopf
3 Gehäuse / Träger
4 Schwenkspiegel
5 Umlenkspiegel
6 Fokussieroptik
7 Detektor PMT
8 Übertragungsstück
9 Kühlrippen
10 Bedienelement mit Drehstange
11 Objektiveinsatz mit Objektivgewinde
12 Empfängerelektronik
13 Strahlengang

Es zeigen:
Fig. 2: Eine Draufsicht auf die Baugruppe
Fig. 3: Eine erste Schrägansicht

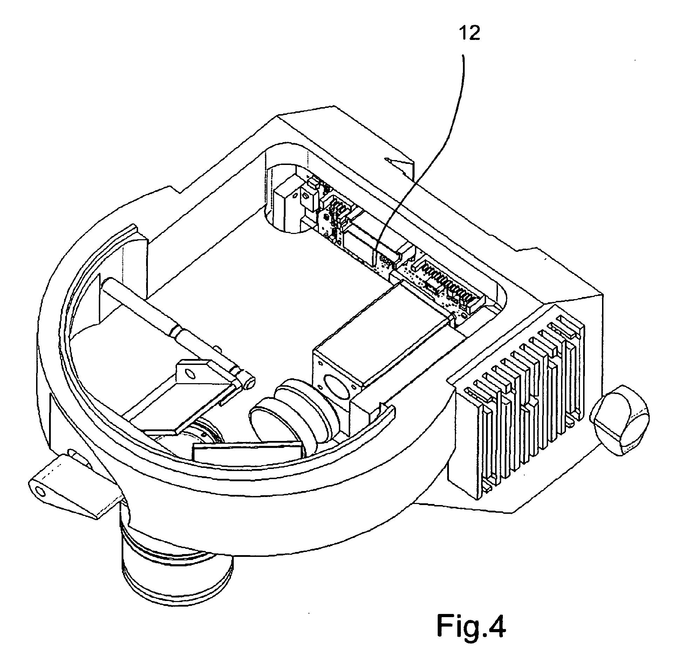

Fig.4: Eine zweite Schrägansicht, um ca. 90 Grad zu Fig. 2 versetzt.

In Abbildungen ist die erfindungsgemäße Integration eines NDD in den Träger für den Objektivwechsler an einem Mikroskop dargestellt. Bei diesem Ausführungsbeispiel handelt es sich um ein aufrechtes Mikroskop mit Objektivfokussierung, analog ist aber auch eine Übertragung auf andere Mikroskoptypen (inverse Mikroskope) möglich.

Dabei wird das von der Probe kommende Licht durch ein Objektiv gesammelt und über Strahlablenker und gegebenenfalls eine zusätzliche Abbildungsoptik auf einen Detektor abgebildet.
In der Praxis wird üblicherweise ein Wechsel zwischen descanned-detection und non-descanned-detection vorgenommen werden.

Dies kann durch ein entsprechendes reflektierendes oder teildurchlässiges Element erfolgen, das den Strahlengang umschaltet oder für beide aufteilt.

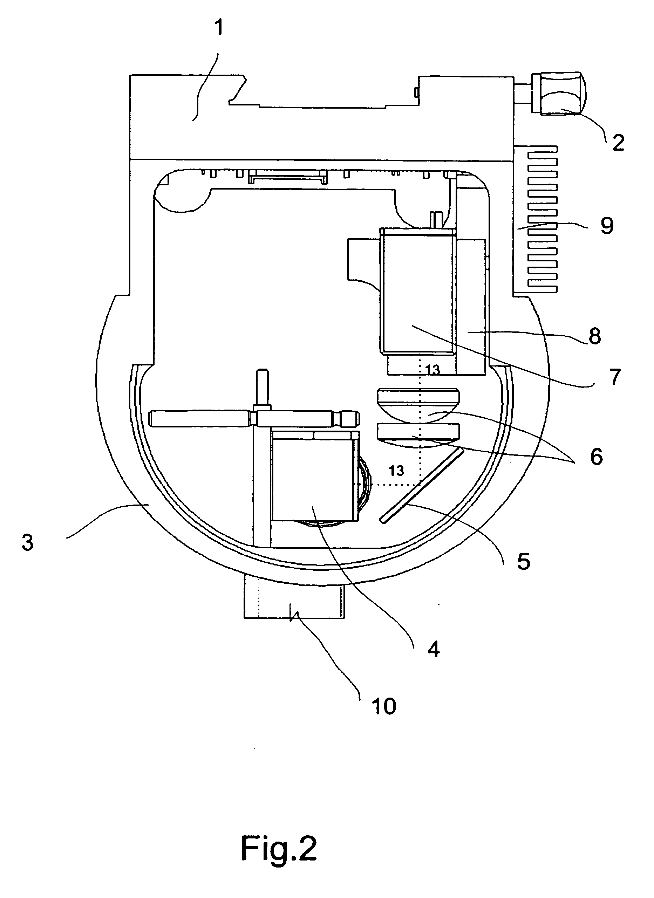

In allen Abbildungen sichtbar ist eine Schwalbenschwanzführung 1 zur vorteilhaft höhenverstellbaren und über einen Feststellknopf 2 fixierbaren Anlenkung an ein (nicht dargestelltes) Mikroskopstativ.
Aus dem Stand der Technik ist allgemein bekannt, dass zur Fokussierung eine Tischverstellung in vertikaler Richtung oder eine vertikale Verstellung des Objektivs oder beides erfolgen kann. Beispielhaft sei hier US5270855 (Darstellung prior art) erwähnt.
Bei der Erfindung wird die Baugruppe gemeinsam mit dem Objektiv vertikal verstellt , wodurch die optische Beziehung, insbesondere die optische Weglänge zwischen Objektiv und Detektor vorteilhaft erhalten bleibt.
In einem Gehäuse 3 ist ein über ein Bedienelement und eine Drehstange 10 schwenkbarer Spiegel 4 vorhanden, der über einer optischen Durchgangsöffnung mit einem Objektivgewinde 11
und einem nicht dargestellten Mikroskopobjektiv angeordnet ist. Der Strahlengang 13, der über den Schwenkspiegel 4 verläuft ist in Fig. 1 und 2 gestrichelt dargestellt. Das Licht das durch das Mikroskopobjektiv hindurchtritt erreicht über den Schwenkspiegel 54 und einen weiteren Umlenkspiegel 5 sowie eine Fokussieroptik 7 einen Detektor 7, nämlich einen PMT, der innerhalb des Gehäuses 3 angeordnet ist. Der Detektor kann durch geeignete Steckplatinen auswechselbar gestaltet sein.
Bei aus dem Strahlengang ausgeschwenktem Spiegel 4 gelangt das Probelicht wie im oben beschriebenen Stand der Technik beschrieben in Richtung der descannten Detektionsanordnung des Mikroskops.
Neben dem Detektor 7 befindet sich ein wärmeleitendes Übertragungsstück 8 zur Wärmeabführung des Detektors in Richtung von außen am Gehäuse 3 angeordneten Kühlrippen 9.

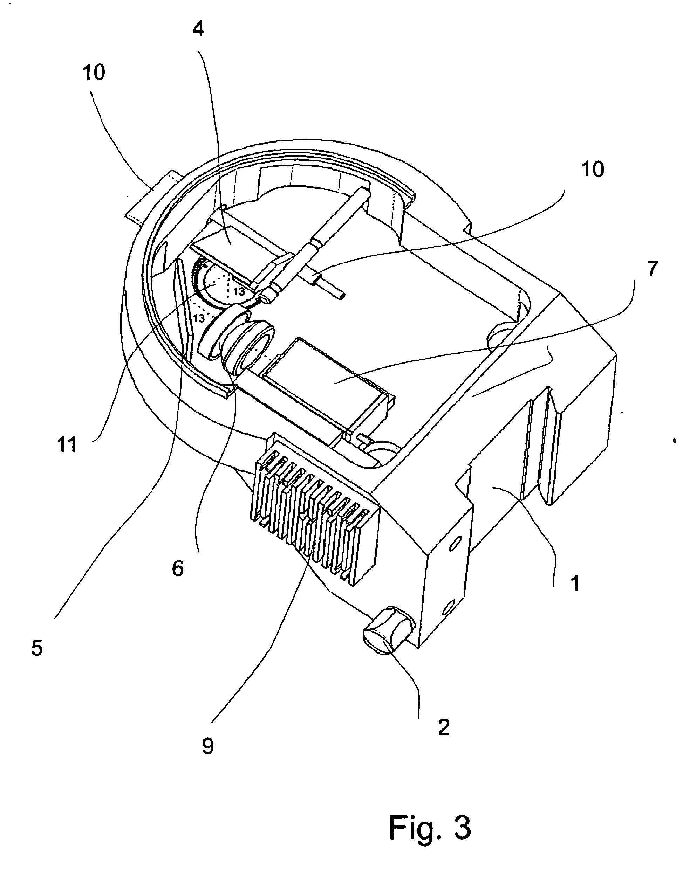

In Fig. 3 ist zusätzlich dargestellt, dass erfindungsgemäß die Empfängerelektronik 12 für den Empfänger 7 gleich unmittelbar im Gehäuse 3 der Baugruppe angeordnet ist. Sie ist (nicht dargestellt) mit der zentralen Ansteuereinheit des Mikroskops verbunden.
Über diese zentrale Ansteuereinheit erfolgt auch in bekannter Weise die Fokussierung des Mikroskops, üblicherweise über elektrische Verstellung des Mikroskopobjektives entlang der optischen Achse über eine am Mikroskopobjektiv senkrecht verschiebbare Einheit, an der die beschriebene Baugruppe angelenkt ist.
Erfindungsgemäß erfolgt also gemeinsam mit der Verschiebung des am Gehäuse befindlichen Mikroskopobjektives eine Verschiebung der gesamten Baugruppe, das heißt eine gleichzeitige Verschiebung des in der Baugruppe befindlichen Empfängers. Erfindungsgemäß bleibt gegenüber bekannten Lösungen im Stand der Technik der optische Abstand zwischen Mikroskopobjektiv und dem Detektor 7 konstant, so dass keine Empfindlichkeitsschwankungen durch Verstellung der optischen Bedingungen bezüglich der Fokussieroptik 7 mehr auftreten.
Ohne weitere, auch elektronisch störanfällige Kabelverbindungen erfolgt die Auswertung des Detektorsignales des Detektors 7 innerhalb des Gehäuses 3 (durch die dargestellte Anordnung der Elektronik 12 und das digitalisierte Signal kann störungsfrei von der Elektronik in Richtung der Mikroskopansteuerung gelangen.
Die dargestellte kompakte Baugruppe ist durch die Anordnung des Detektors unmittelbar am Objektiv in einer Baugruppe bzw. im Objektivwechsler, wenn unterhalb des Gehäuses 3 in geeigneter Weise ,ein Objektivwechsler, beispielsweise zum Wechsel zwischen zwei Objektiven über eine Schub/ Drehstange wie in DE19822870A1 angeordnet ist.
Der dargestellte und beschriebene Aufbau bedeutet vorteilhaft und erstmalig, dass keinerlei zusätzlicher seitlicher Aufbau wie im Stand der Technik vorgesehen ist, der die Sicht der Bedienperson und ihre Handlungsfähigkeit, insbesondere wenn zwischen Objektiv und Probe Manipulatoren vorgesehen sind oder eine sonstige Probenmanipulation erfolgt, einschränkt

Da die für die NDD Detektion benötigten Elemente dicht an der optischen Achse angeordnet sind, ist das System insgesamt stabiler und es treten keine asymmetrischen größeren Masseverteilungen mehr auf, die bewegt werden müssen. Im Gehäuse 2 kann auch (nicht dargestellte) über einen zusätzlichen Strahlteiler nach dem Spiegel 5 eine Aufspaltung des Probenlichtes in zwei oder mehrere 8 Strahlanteile erfolgen, die zu zwei
oder mehreren, simultan oder wahlweise betriebenen Detektoren führen.
Damit ist trotz der Kompaktheit der Baugruppe die Möglichkeit einer großen Flexibilität gegeben.

Durch die erfindungsgemäße Anordnung ist insbesondere auch eine sehr hohe Lagegenauigkeit zwischen Objektiv und Detektor gewährleistet.

## Patentansprüche

1. Scanmikroskop
a) mit einer gepulsten Lichtquelle, die Beleuchtungslicht zur Beleuchtung einer Probe emittiert,
b) mit mindestens einem ersten Detektor zur Detektion von von der Probe ausgehendem Detektionslicht und
c) mit einem Objektiv, das sowohl in einem Beleuchtungs- als auch einem Detektionsstrahlengang angeordnet ist,
d) mit einem zweiten Detektor zur non-descannten Detektion des von der Probe ausgehenden Detektionslichts,
e) mit einem Stativ mit einer Führung (1), an der ein Objektivträger zum Fokussieren höhenverstellbar angebracht ist,
f) mit Auskoppelmitteln zum Leiten von Detektionslicht auf den zweiten Detektor,
**dadurch gekennzeichnet**,
g) dass als Objektivträger eine Baugruppe mit einem Gehäuse (3) vorhanden ist, wobei das Gehäuse (3) mindestens eine Aufnahme (11) aufweist, in welcher das Objektiv aufgenommen ist,
h) dass das Gehäuse (3) an dem Stativ vertikal verschiebbar angelenkt ist,
i) dass das Gehäuse (3) entlang einer optischen Achse gemeinsam mit dem Objektiv verschiebbar ist,
k) dass der zweite Detektor (7) ein Photomultiplier ist,
l) dass in dem Gehäuse (3) eine Auswerteelektronik für die Signale mindestens des zweiten Detektors (7) angeordnet ist,
m) dass mindestens der zweite Detektor (7) über wärmeleitende Medien mit außerhalb des Gehäuses (3) angeordneten Kühlmittein verbunden ist,
n) dass im Gehäuse (3) weitere Umlenkspiegel zum Umlenken des Detektionslichts in Richtung zum zweiten Detektor (7) vorhanden sind,
o) dass eine Fokussieroptik zur Fokussierung des Detektionslichts auf den zweiten Detektor (7) im Detektionsstrahlengang zwischen den Umlenkspiegeln und dem zweiten Detektor (7) vorhanden ist,
p) dass ein optischer Abstand zwischen dem zweiten Detektor (7) und dem Objektiv beim Fokussieren konstant bleibt und
q) dass die Auskoppelmittel als schwenkbarer Spiegel ausgebildet sind.

2. Scanmikroskop nach Anspruch 1, wobei ein teildurchlässiger Spiegel zur gleichzeitigen Detektion über ersten und zweiten Detektor im Detektionsstrahlengang vorhanden ist.

3. Scanmikroskop nach einem der vorangehenden Ansprüche, wobei mindestens der zweite Detektor über wärmeleitende Medien mit außerhalb des Gehäuses angeordneten Kühlrippen verbunden ist.

4. Scanmikroskop nach einem der vorangehenden Ansprüche, wobei vor dem Detektor Filter zur Auswahl von Deteküonsweltenlängen vorhanden sind.

5. Scanmikroskop nach einem der vorangehenden Ansprüche, zur nichtlinearen Fluoreszenzanregung, insbesondere SHG und/ oder Mehrphotonenanregung.

6. Scanmikroskop nach einem der vorangehenden Ansprüche, wobei eine Aufspaltung des NDD Detektionslichtes erfolgt und mindestens ein weiterer Detektor, vorzugsweise im Gehäuse, der Aufspaltung nachgeordnet ist.

## Claims

1. A scanning microscope,
a) comprising a pulsed light source, which emits illumination light for illumination of a specimen,
b) comprising at least a first detector for detection of detected light emanating from said specimen,
c) comprising an objective disposed both in an illumination path and in a detection path,
d) comprising a second detector for non-descanning detection of said detection light emanating from said specimen,
e) comprising a stand having a guide (1), on which an objective stage is vertically adjustable for focusing purposes, and
f) comprising decoupling means for guiding detected light to said second detector, **characterized in that**
g) said objective stage is an assembly comprising a housing (3), which housing (3) has at least one accommodating means (11) in which said objective is accommodated,
h) said housing (3) is hingedly mounted on said stand for vertical displacement thereon,
i) said housing (3) is displaceable along an optical axis together with said objective,
k) said second detector (7) is a photomultiplier,
l) in said housing (3) there is disposed an electronic evaluating system for the signals produced by at least said second detector (7),
m) at least said second detector (7) communicates via thermally conducting media with cooling means disposed outside of said housing (3),
n) in said housing (3) there are disposed further deflection mirrors for deflection of said detection light toward said second detector (7),
o) an optical focusing system for focusing said detection light onto said second detector (7) is present in the detection path between said deflection mirrors and said second detector (7),
p) an optical distance between said second detector (7) and said objective is kept constant during the focusing operation, and
q) said decoupling means are in the form of pivotal mirrors.

2. The scanning microscope as defined in claim 1, wherein a semitransparent mirror is present in said detection path for simultaneous detection by means of said first detector and said second detector.

3. The scanning microscope as defined in any one of the previous claims, wherein at least said second detector communicates via thermally conducting media with cooling fins disposed outside of said housing.

4. The scanning microscope as defined in any one of the previous claims, wherein filters are present upstream of said detectors for selection of detection wavelengths.

5. The scanning microscope as defined in any one of the previous claims, adapted for nonlinear fluorescent excitation, more particularly SHG and/or multiphoton excitation.

6. The scanning microscope as defined in any one of the previous claims, wherein the NDD detection light is split and at least one further detector is disposed downstream of the splitting point, preferably within said housing.

## Revendications

1. Microscope à balayage
a) avec une source de lumière pulsée qui émet de la lumière d'éclairage pour éclairer un échantillon,
b) avec au moins un premier détecteur pour détecter une lumière de détection partant de l'échantillon, et
c) avec un objectif qui est placé à la fois sur une trajectoire de rayons d'éclairage et sur une trajectoire de rayons de détection,
d) avec un deuxième détecteur pour la détection non-déscannée de la lumière de détection partant de l'échantillon,
e) avec un pied muni d'un guidage (1) sur lequel est placé un porte-objectif de manière réglable en hauteur pour permettre la focalisation,
f) avec des moyens de découplage pour envoyer la lumière de détection sur le deuxième détecteur,
*caractérisé*
g) *en ce que,* comme porte-objectif, un sous-ensemble avec un boîtier (3) est présent, le boîtier (3) comprenant au moins un logement (11) dans lequel est placé l'objectif,
h) *en ce que* le boîtier (3) est articulé sur le pied de manière mobile verticalement,
i) *en ce que* le boîtier (3) est mobile le long d'un axe optique en commun avec l'objectif,
k) *en ce que* le deuxième détecteur (7) est un photomultiplicateur,
l) *en ce que* dans le boîtier (3) est placée une électronique d'analyse pour les signaux d'au moins le deuxième détecteur (7),
m) *en ce qu*'au moins le deuxième détecteur (7) est relié par des milieux conducteurs de chaleur avec des moyens de refroidissement placés à l'extérieur du boîtier (3),
n) *en ce que* dans le boîtier (3) se trouvent des miroirs de renvoi supplémentaires pour dévier la lumière de détection en direction du deuxième détecteur (7),
o) *en ce qu*'une optique de focalisation est présente pour focaliser la lumière de détection sur le deuxième détecteur (7) sur la trajectoire des rayons de détection entre les miroirs de renvoi et le deuxième détecteur (7),
p) *en ce qu*'une distance optique entre le deuxième détecteur (7) et l'objectif reste constante lors de la focalisation, et
q) *en ce que* les moyens de découplage sont conformés en miroir pivotant.

2. Microscope à balayage selon la revendication 1, dans lequel un miroir semitransparent est présent pour une détection simultanée sur le premier et le deuxième détecteurs sur la trajectoire des rayons de détection.

3. Microscope à balayage selon l'une quelconque des revendications précédentes, dans lequel au moins le deuxième détecteur est relié par des milieux conducteurs de chaleur avec des ailettes réfrigérantes placées à l'extérieur du boîtier.

4. Microscope à balayage selon l'une quelconque des revendications précédentes, dans lequel des filtres sont présents avant le détecteur pour sélectionner des longueurs d'onde de détection.

5. Microscope à balayage selon l'une quelconque des revendications précédentes, destiné à une excitation par fluorescence non linéaire, en particulier SHG et/ou excitation par photons multiples.

6. Microscope à balayage selon l'une quelconque des revendications précédentes, dans lequel une scission de la lumière de détection NDD est effectuée et au moins un autre détecteur est placé après la scission, de préférence dans le boîtier.
